# EUROPEAN PATENT APPLICATION

(11) **EP 0 676 148 A1**
(43) Date of publication of application: **11.10.1995**
(21) Application number: 95101091.7
(22) Date of filing: 26.01.1995
(51) Int. Cl.: A23N 12/08

(54) **Apparatus for roasting coffee beans**

(30) Priority: 07.04.1994 KR 7200038
(71) Applicant: IMEX CORPORATION, Seoul 150-010 (KR)
(72) Inventor: Song, Eugene, Young Deung Po-Gu, Seoul (KR)
(74) Representative: Grünecker, Kinkeldey, Stockmair & Schwanhäusser Anwaltssozietät

(57) **Abstract**

The present invention relates to an apparatus for roasting raw coffee beans which can instantly roast a small quantity of raw coffee beans according to personal taste and provide a unique taste and fragrance of coffee, in particular an apparatus suitable for home use. The apparatus has a roasting vessel (500) that has a bottom portion (510) with an interiorly, upwardly-projecting, substantially conically-shaped bottom surface (511) having air opening means (512,513). The air openings (512,513) are a plurality of holes having first set (512) and a second set (513) located for creating a whirling vertical motion to a heated airstream ascending therethrough, whereby the raw beans are roasted and also caused to have their peels separated and caused to ascend upwardly with the airstream to a peel receiving vessel (700).

## Description

The present invention relates to an apparatus and a method for roasting raw coffee beans, the apparatus of which is capable of instantly roasting a small quantity of raw coffee beans according to personal taste and for providing unique taste and fragrance of coffee, and, in particular, to an apparatus suitable for home use.

Coffee is a popular drink. Drinking coffee has been prepared by boiling raw beans with a percolator or by mixing coffee powders in boiling water. In the present days, however, people have a tendency to prefer raw bean coffee which is superior in taste and fragrance.

In spite of their quality, the taste and fragrance of raw bean coffee can be changed not only by the ways of processing raw beans, but also in the manner they are stored. Thus, the present invention offers a unique way to instantly process raw Leans properly, in a small quantity, whenever required.

The present invention was made with a view to satisfying the aforementioned requirements, and its object is to provide an apparatus for roasting raw coffee beans at home according to personal taste.

This object is met by the features of claims 1, 11, and 18. Preferred embodiments are claimed in the depending claims.

The apparatus of the invention is adapted to roast raw beans by means of a heated airstream for a predetermined period of time, to simultaneously remove raw-bean peels, and then to apply a cooling airstream at the end of the roasting process.

### BRIEF DESCRIPTION OF THE DRAWINGS

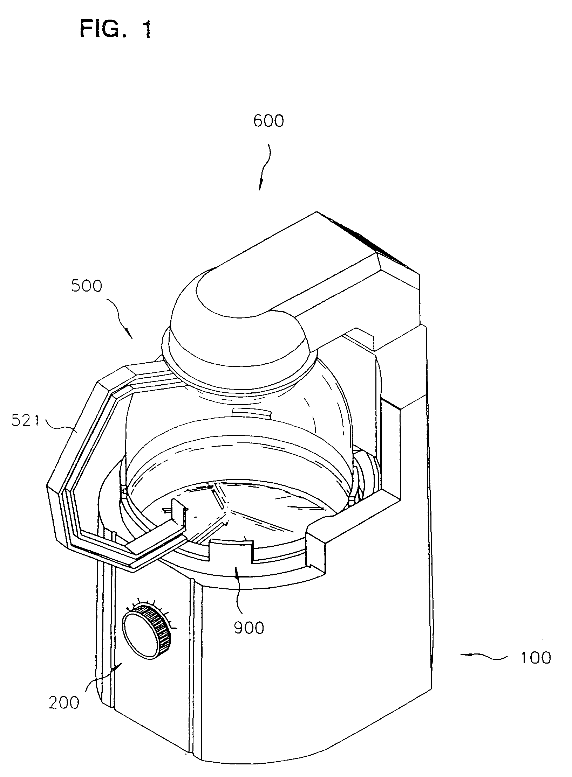

Fig. 1 is a perspective view of the apparatus of the present invention in its assembled state;

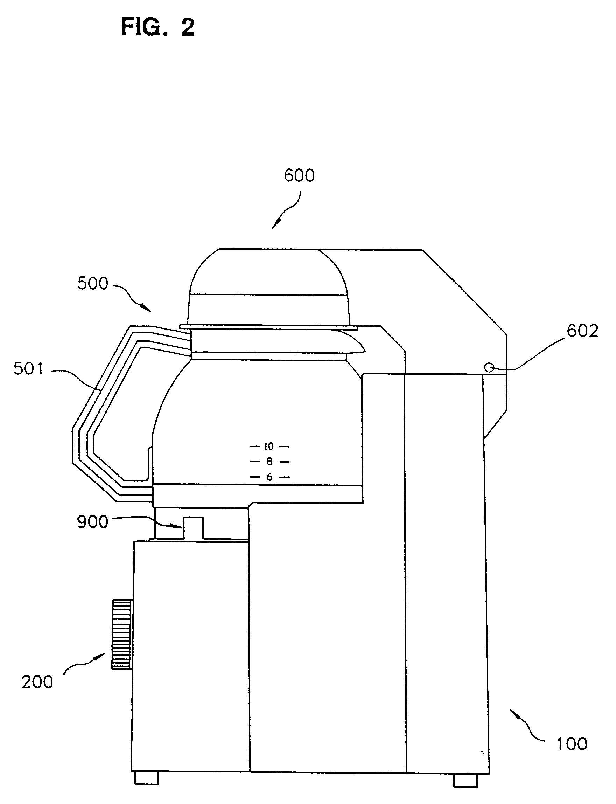

Fig. 2 is a side view of Fig. 1;
Fig. 3 is a vertical cross-sectional view of the apparatus of the present invention;
Fig. 4 is a perspective view showing the assembled state of a seal and roasting-vessel mounting member according to the present invention;
Fig. 5 is a perspective view showing the assembled status of a blowing fan and a heater unit according to the present invention;
Fig. 6 is a perspective view showing a roasting vessel according to the present invention;
Fig. 7 is a perspective view showing the assembled state of the cover and peel-receiving vessel according to the present invention; and
Fig. 8 is a vertical cross-sectional view showing the apparatus of the present invention in operation.

### DESCRIPTION OF THE PREFERRED EMBODIMENT

The invention will be described hereinafter in more detail by reference to the accompanying drawing.

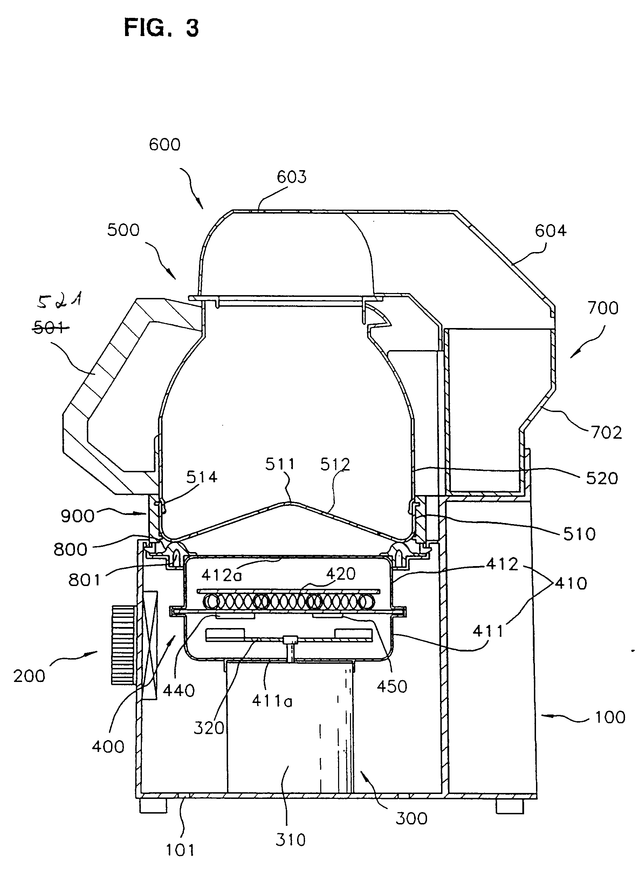

The apparatus of the present invention includes a main body or housing 100, a timer 200, a heater 400 (Fig. 3), a roasting vessel 500 in which are placed raw coffee beans that are to be roasted, a cover 600, and a peel-receiving vessel 700 for receiving and storing therein the separated peels of the roasted beans (Fig. 3). The structure and characteristics of each element are explained below.

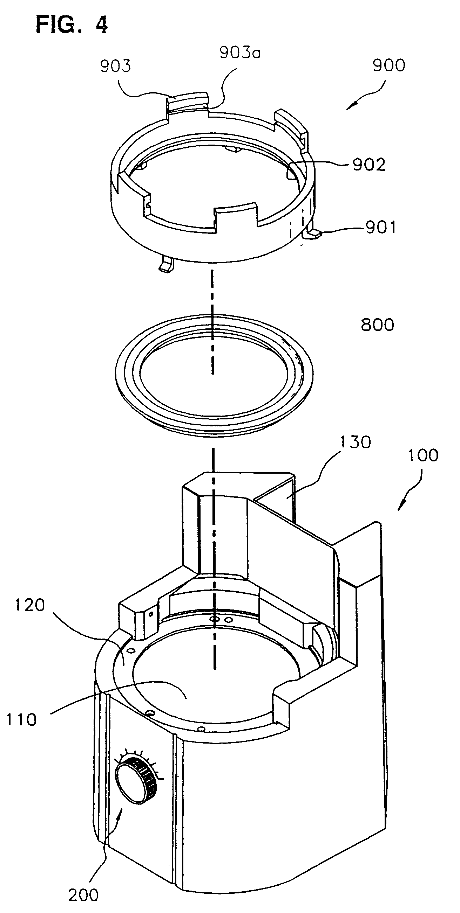

The main housing 100 has a central section which is similar to a cylindrical shape, and is open from above, and has an air inlet 101 (Fig. 3) formed therein, a blowing fan/heater mounting portion 110 (Fig. 4), a roasting-vessel mounting portion 120, and a peel-receiving vessel mounting portion 130. There are provided a plurality of air inlets 101, formed in the bottom of the main housing 100, so that ambient air is inducted from the exterior of the housing 100 to the interior. The blowing fan/heater mounting portion 110 of the main housing 100 has a cylindrically-shaped, interior space, so that a blowing fan 320 (Fig. 3) and a heater unit 400 may be mounted therein . The roasting-vessel mounting portion or receptacle 120 has an annular flange or bead that projects inwardly to the inside of housing 100 at the upper circumference of the blowing fan/heater mounting portion 110, so that a roasting vessel, which will be explained hereinafter, can be safely mounted. The peel-receiving vessel mounting portion 130 enables peel-receiving vessel 700, which will be explained hereinafter, to be safely mounted at rear of the housing 100, in which air recovering openings are formed.

A conventional timer 200 is installed in front of the housing 100, and operated in a rotary manner, in order to allow for the performance of a roasting step and a cooling step. In other words, when timer 200 is in the roasting phase, blowing fan assembly 300 and heater assembly 400 are adapted to be operated, and when timer 200 is in the cooling phase, only the blowing fan assembly 300 is adapted to be operated, while the heater assembly 400 is not operated. It is preferred that the timer 200 indicate the sign with regard to the roasting stage and the cooling stage at the front part of the housing 100 at which the timer 200 is installed, so that the timer 200 can adjust the operating time of the heater assembly 400 according to the quantity of raw beans to be processed. For example, the roasting state indicates the number of cups of coffee to be extracted from raw beans to be processed, and the cooling state is indicated in the units of minutes, it being proper for the time to be set up to three minutes.

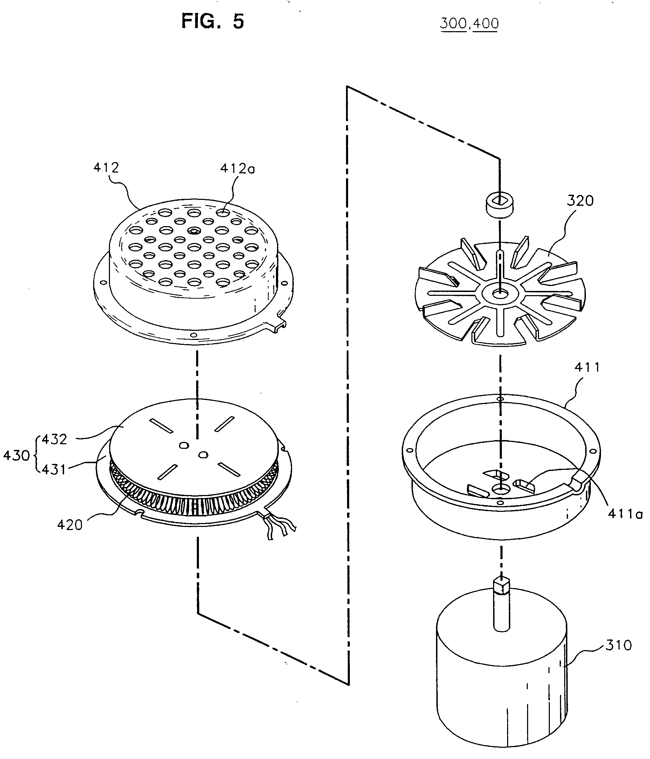

The fan assembly 300 comprises a motor 310 and a fan 320, and is installed in the bottom side of the main housing 100, and is located in the blowing fan/heater mounting portion 110. Preferably, a small-size motor, the capacity of which is around 10,000 rpm, is used. The fan 320 is structured such that it is made from a flat sheet that has vanes bent radially outwardly, as seen in Fig. 5, and is fabricated to the size which can be installed in the heater assembly 400. The heater assembly 400 is operatively positioned above the blowing fan and consists of an outer casing 410 and a heating element 420 installed therein. The casing 410 has a lower casing section 411 and an upper casing section 412 having blow openings 411a and 412a, respectively. The blow openings 411a in the lower case 411 are formed largely in the part thereof which is opposite the motor 310, in order to maximize the airstream. The blow openings 412a in the upper casing 412 are formed in large number but in small size, and they extend over a large, wide area in order to disperse the airstream. The heating element 420 is fixed between a pair of insulating plates, an upper plate 432 and a lower plate 431 (Fig. 5). The lower insulating plate 431 is affixed to the outer casing 410 between parts 411 and 412 thereof, with its diameter being larger than the upper insulating plate 432. The heating assembly includes a thermostat 440 and a temperature fuse 450 connected to heating element 420, in order to prevent overheating, in the conventional manner.

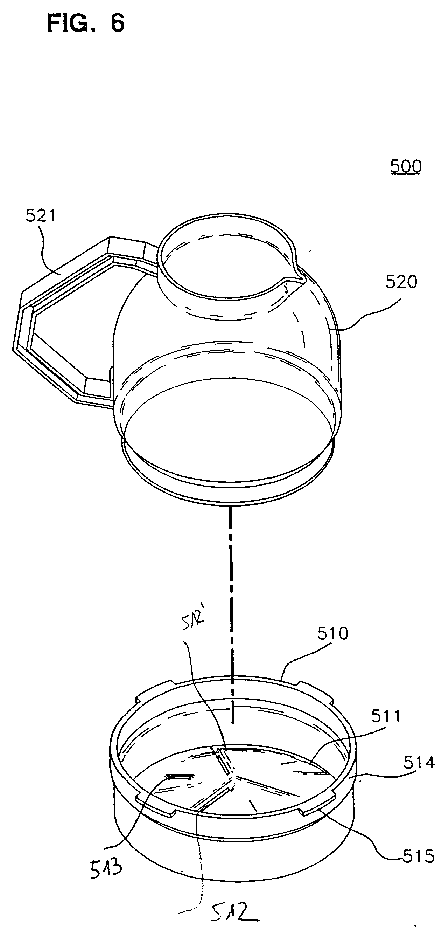

The roasting vessel 500 is placed in roasting-vessel mounting portion 120 formed in the main housing 100, such that it is positioned above and over heater assembly 400, and it consists of a bottom portion 510 and a main body portion 520. The bottom portion 510 is made of a nonferrous metal having good thermal conductivity, such as an aluminum, with the interior of the bottom 511 projected upwardly like a cone, in which are formed blow openings 512 and 513 arranged radially. The air openings 512 are formed in the central part of the bottom 511 (Fig. 6), and the air openings 513 are formed about the outer part. The three, or more, air openings 512 are arranged like steps. That is, each opening 512 is formed as a linear slot that marks the termination or outlet of a raised, upwardly sloping upper wall 512'. Each upper, sloping wall 512' begins substantially at a lower vertical level coplanar with the rest of the bottom surface 511, in which are formed the air openings 513, and then each rises for approximately 60 degree radial arc about the bottom surface 511, and then terminates in the horizontal-slot air opening 512. The three such air openings 512 thus provide swirling air current motion. The three air openings 513 are located on the bottom surface 511, and are interspersed between the three air openings 512, whereby the three air openings are spaced 120 degree apart. However, it is possible to provide just one air opening 513 in order to supply the upward air current. The circumferential portion 514 of the bottom portion 510 is adapted to support the open bottom of main body portion 520. It is preferred that the main body portion 520 be made of transparent glass having a low thermal conductivity, in order for the inside to be visible, so that a measuring indicator may be provided. For example, a user may measure the quantity accurately by indicating the number of cups of coffee to be extracted according to the quantity of raw beans fed into the roasting vessel 500. In addition, the main body portion 520 is equipped with a handle 521, and its cross-sectional area is preferably H- shaped to enlarge its thermal emitting effect.

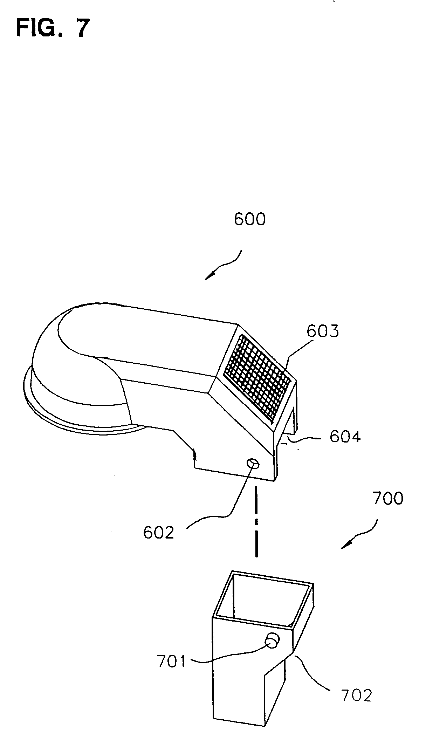

A cover 600 (Fig. 7) for the roasting vessel is made from synthetic resin material for a good moldability. The cover 600 forms an air path so as to accomplish the functions of not only opening and closing the upper part of the body portion 520 of the roasting vessel, but also is used for directing and discharging separated raw-bean peels to the peel-receiving vessel 700 by being connected to it by means of hinge openings 602 located in both lateral sides of its rear. At the upper side of this cover 600, first air outlets 603 and second outlets 604 are formed in the shape of long slots, and preferably, as can be seen in Fig. 3, the first outlets 603 are arranged radially on the central part of a cover, while the second outlets 604 are arranged on the extended portion at which the airstream path is formed. The peel-receiving vessel 700 has projections 710 formed in its sides, so as to pivotably mount the cover 600, and is fabricated so as to be safely placed in the peel-receiving vessel mounting portion 130 located at the backside of the housing 100. The peel-receiving vessel 700 forms a chute with inner and downwardly extending inclined surfaces and has a plurality of air openings in its bottom surface similar to the first and second air outlets 603,604 so that the airstream from cover 600 is finally discharged therethrough.

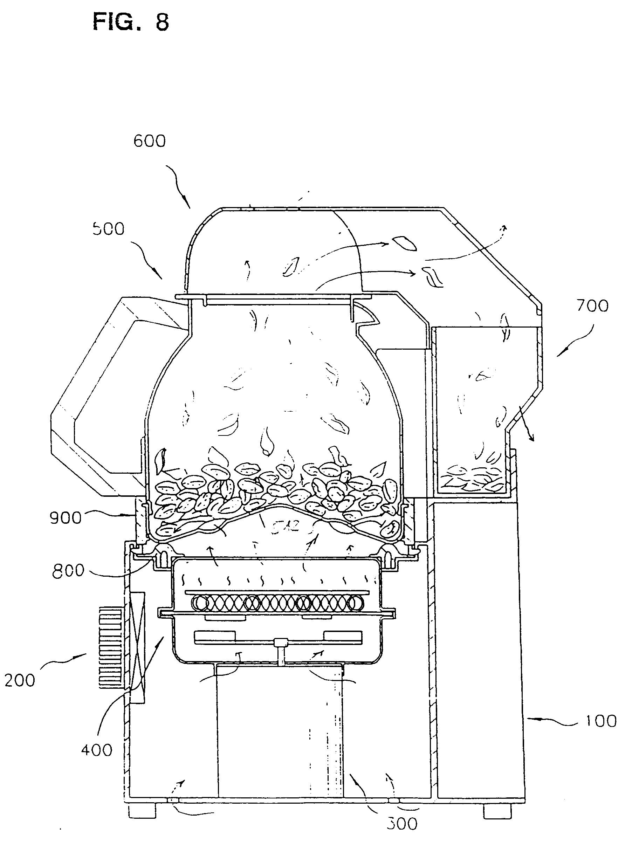

A seal 800 is further provided (Figs. 4 and 8), in order to provide an air seal when the roasting vessel 500 is placed on main housing 100. Also provided is a mounting member 900 that allows the roasting vessel 500 to be attached to, or detached from, the main housing 100. The annular seal or packing 800 is made of silicone having good heat-resistance, and is dimensioned such that the inner circumference thereof is placed on the outer annular edge of the upper surface of the casing part 412 of heater assembly casing 410, while the outer circumference thereof is placed on the annular bead or flange 120 of the roasting-vessel mounting portion of the housing 100. A groove is formed in the bottom surface of the seal 800 in order to improve its compressibility. The roasting-vessel mounting member 900 is also in annular form, and has a plurality of downwardly-extending projections 901 that are formed in its bottom surface, and which are affixed to the inner diameter part thereof. The mounting member 900 also has a inwardly-projecting, annular bead 902 formed at an intermediate inner circumference thereof, for abutment against the upper surface of seal 800. The outer diameter of the annular bead 902 is approximately equal to the outer diameter of the seal 800, whereby the seal 800 snugly fits inside the lower portion of the mounting member 900 against the bottom surface of the bead 902. Thus, the annular bead 902 provides a seal-bearing surface for compressing the seal. A plurality of upwardly-extending projections 903 are also provided, with an inclined groove 903a being formed in each at its upper side, in order to attach and detach the roasting vessel 500. Namely, the roasting vessel 500 can be fixed by providing the same number of mating projections 515 in the outside of the bottom surface 510 at the location corresponding to projections 903.

The assembly of the present invention of the aforementioned construction will now be explained. Firstly, the timer 200 is assembled in the front of the housing body 100. Blowing fan 320 is integrally combined with motor 310, such that fan 320 is placed in lower casing 411 of heater assembly 400, when blowing fan assembly 300 and heater assembly 400 are assembled. Then, the insulating plate assembly 430 having heating element 420 is installed in casing 410. In this case, lower insulating plate 431 is affixed at the location where the lower casing 411 and upper casing 412 meet. Thus, blowing fan 320 is positioned at the lower side of the heating assembly 420, and the blowing fan and heater are assembled integrally under the condition of being installed in the case 410. The body portion 520 of the roasting vessel is combined with the bottom portion 510, with tight fitness. The cover 600 and the peel-receiving vessel 700 are then combined, the former being adapted to be hinged to the latter by inserting projections 701 into holes 602. After each element has been assembled, the blowing fan assembly 300 and the heater assembly 400 are emplaced, so that they are positioned in blowing fan/heater housing portion 110 of the main housing 100. At this time, motor 310 is affixed at the bottom of housing 100, while the upper part of heater casing 410 is close to the roasting vessel mounting annular flange 120. Next, after putting seal 800 on roasting-vessel mounting flange 120 and on the upper surface-edge of the casing part 412, the mounting member 900 is attached to the roasting-vessel mounting flange 120, as seen in Fig. 3 by means of the projections, or feet, 901. The projections 901 abut against the underside of roasting-vessel mounting flange 120, with the annular bead 902 abutting against the upper surface of the seal 800 for sandwiching the seal tight. Then, in order to mount the roasting vessel 500, its main body portion 520 is rotated clockwise when its bottom portion 510 is positioned in the mounting member 900, which rotation is accomplished by holding handle 521 of main body portion 520. The rotation causes the projections 515 to be inserted in inclined grooves 903a of the mounting member 900. At this time, the annular bottom edge of the bottom portion 510 of the roasting vessel is supported on the upper part of seal 800, as seen in Fig. 8. Thus, the grooved portion 801 of the seal 800 is widened, which results in greater surface contact between bottom portion 510 and seal 800. In this way, an air-tightness is ensured. Furthermore, if body portion 520 is rotated counter-clockwise, removal is achieved. The cover 600 is then placed on the entrance of main body portion 520 of the roasting vessel, and peel-receiving vessel 700 is placed in peel-receiving mounting portion 130 of the main housing 100. The apparatus of the present invention is, then, in a usable state.

The use of the present invention assembled as above is in the order set forth below.
a) A suitable quantity of raw beans are put into roasting vessel 500. At this time, the required quantity can be determined on the basis of the scale on the main body portion 520.
b) The roasting vessel 500 containing raw beans is placed on the mounting member 900, and, thereafter, locked by being rotated clockwise.
c) After the cover 600 is hinged to peel-receiving vessel 700, peel-receiving vessel 700 is placed in peel-receiving mounting portion 130 of the main housing 100, and the roasting vessel 500 is covered with cover 600.
d) The timer is set to the desired indicia on the scale thereof, according to the quantity of raw beans to be roasted. At this time, if controlled in accordance with the scale indicated on the main body portion 520, a roasting step and a cooling step are accomplished, in order. For the roasting step, the fan assembly 300 and heater assembly 400 are operated, so that motor 310 and fan 320 are rotated at the speed of about 7000-8000 rpm, and the heating element 420 is heated to about 180 degrees C. Thus, ambient air is sucked through air inlets 101 of the bottom of the housing 100 and openings 411a of the heater casing 410, and a heated airstream is generated to ascend rapidly through the heater casing 412a. Since the ascending heated airstream is sealed via seal 800, it is discharged through openings 512, 513 formed at the bottom of a bottom portion 510 of the roasting vessel, without leaking to the outside. Thus, the airstream passing through air openings ascends vertically, and the ascending airstream passing through air openings whirls around in the circumferential direction. Consequently, a compound, ascending stream is generated at the inside of the roasting vessel 500. By such heated and partially turbulent hot airstream, raw beans in the roasting vessel 500 are mixed uniformly, roasted and gradually peeled. The peels that are removed from the raw beans by the turbulent airstream, and ascend upwardly. At this time, the heated wind ascending in the roasting vessel 500 is diminished in its quantity, because a part of it is discharged through the first outlets 603 and the second outlets 604 in cover 600, and the peels ascending to cover 600 are directed to peel-receiving vessel 700 along the upstream blowing path. The peels then descend along with a stream of air discharged to peel-receiving vessel 700, in order to accumulate in peel-receiving vessel 700. The raw beans being roasted with their peels removed have a deep brown color. When raw beans have been roasted adequately, timer 200 causes the apparatus to enter into the cooling stage after finishing the roasting step. In the cooling stage, since the power source is continuously connected only to blowing fan 320 and disconnected from the heater unit 400, only the blowing fan 320 operates. Thus, since a cooling wind is introduced, the raw beans are cooled, and the oil does not soak out, and the surfaces of raw scrubbing. The cooling step continues for about three minutes. Interruption of the power source to blowing fan 300 ends the cooling stage.
e) After raw beans have been roasted, cover 600 is lifted up and the handle of a roasting vessel 500 is rotated counter-clockwise to separate the roasting vessel 500 from housing 100, to thereby to obtain the roasted beans.
f) Afterwards, the peels are separated from the cover 600 by pressing both sides of a peel-receiving vessel 70, and thrown out. Raw beans obtained through a roasting process as above are pulverized with a pulverizer and extracted with an extracting machine, and usable as raw bean coffee.

The present invention aforementioned can be fabricated to a small size so as to be used easily at home, and it can provide raw coffee by roasting a small quantity of raw beans whenever required. Additionally, it enables users to enjoy a taste and fragrance of raw beans variably by adjusting the processing time according to a personal taste.

While a specific embodiment of the invention has been shown and described, it is to be understood that numerous changes and modifications may be made therein without departing from the scope, spirit and intent of the invention as set forth in the appended claims.

## Claims

1. An apparatus for roasting raw coffee beans comprising,
a main housing (100) having an air inlet (101);
said main housing comprising a first portion (110) for mounting a fan assembly and a heater assembly and a second portion (120) for mounting a peel-receiving vessel (700);
a blower fan assembly (300) mounted in said first portion (110) of said main housing (100) for blowing air;
a heater assembly (400) mounted in said housing (100) above said blower fan assembly (300) for generating heat, said blower fan assembly directing the heat upwardly;
a roasting vessel (500) placeable above said heater assembly (400) so that the heated air stream is directed upwardly theretowards; said roasting vessel (500) containing therein raw coffee beans to be roasted; said roasting vessel (500) having a plurality of holes (512,513) for allowing the heated air stream from said heater assembly (400) to enter into the interior thereof;
a cover (600) connectable to said roasting vessel (500) and closing off said roating vessel, said cover having peel-guide means for directing the peels of the roasted coffee beans;
a peel-receiving vessel (700) mounted to said second portion (120) of said main housing (100) for receiving and storing therein the raw-bean peels directed thereto from said guide means of said cover (600).

2. The apparatus for roasting raw coffee beans according to claim 1, wherein said apparatus further comprises an annular seal (800) upon which said roasting vessel (500) is at least partially supported, said seal (800) being supported by a portion of said heater assembly (400) and a part of said main housing (100).

3. The apparatus for roasting raw coffee beans acccording to claim 2, wherein said seal (800) comprises an annular groove for aiding in its sealing function.

4. The apparatus for roasting raw coffee beans according to claim 1, wherein said apparatus further comprises an annular, detachable mounting member (900) for mounting said roasting vessel (500).

5. The apparatus for roasting raw coffee beans according to claim 4, wherein said mounting member (900) comprises a bottom and plurality of mounting projections (910) formed at said bottom, said projections (901) being operatively associated with said part of said main housing (100) for mounting said mounting member (900); said mounting member (900) further comprising an interior annular bead (902) for contact against said seal (800), and at least one upwardly extending finger-member (903) for detachably supporting said roasting vessel.

6. The apparatus for roasting raw coffee beans according to claim 1, further comprising a timer (200) for controlling the operation of a power means that provides power to said fan assembly (300) and said heater assembly; said timer (200) having a first stage for coupling said power means to both said fan assembly (300) and said heater assembly (400) and a second stage for coupling said power means to said fan assembly (300) and for disconnecting said power means from said heater assembly, whereby a cooling cycle is provided for cooling off the roasted coffee beans.

7. The apparatus for roasting raw coffee beans according to claim 1, wherein said roasting vessel (500) comprises a main body portion (520), and a bottom portion (510), said bottom portion (510) having an interior, upwardly-projecting, substantially conically-shaped bottom surface (511); said plurality of holes (512,513) in said roasting vessel being formed in said bottom surface (511); said plurality of holes comprising a first set (512) and a second set (513) for creating a whirling vertical motion to the heated airstream ascending therethrough, whereby the raw beans are roasted, causing their peels to separate and ascend upwardly with the airstream to said peel-receiving vessel.

8. The apparatus for roasting raw coffee beans according to claim 7, wherein said roasting vessel comprises a handle (521) having an H-shaped cross section for increasing thermal emission.

9. The apparatus for roasting raw coffee beans according to claim 5, wherein said bottom portion (510) of said roasting vessel (500) comprises at least one projection (515) for cooperating with said at least one upwardly extending finger-member (903) for detachably mounting said roasting vessel.

10. The apparatus for roasting raw coffee beans according to claim 1, wherein said cover (600) opens and closes the upper entrance of said roasting vessel (500), said cover being pivotably connected to said peel-receiving vessel (700).

11. An apparatus for roasting raw coffee beans, comprising
a main housing (100) having an air inlet (101);
a fan assembly (300) mounted by said main housing;
a heater assembly (400) mounted to said housing (100) above said blower fan aseembly (300) for generating heat, said blower fan assembly (300) directing the heat upwardly; and
a roasting vessel (500) placed above said heater assembly (400), said roasting vessel (500) having air-openings for allowing the heated air stream from said heater assembly to enter into the interior therof; said roasting vessel containing therein raw coffee beans to be roasted.

12. The apparatus for roasting raw coffee beans according to claim 11, wherein said apparatus further comprises an annular, detachable mounting member (900) for mounting said roasting vessel to said main housing above said heater assembly.

13. The apparatus for roasting raw coffee beans according to claim 12, wherein said apparatus further comprises an annular seal (800), said mounting member comprising a pluarlity of mounting projections (901) formed at its bottom, said projections being operatively connected to said main housing (100) for mounting said roasting vessel above said heater assembly, an interior annular bead for contact against said seal, and at least one upwardly extending finger-member for detachably supporting said roasting vessel.

14. The apparatus for roasting raw coffee beans according to claim 11, wherein said apparatus further comprises a cover (600) capable of connection to said roasting vessel (500), said cover closing off said roasting vessel (500), said cover (600) having peel-guide means for directing the peels of the roasted coffee beans along a specific downstream path; and a peel-receiving vessel (700) mounted in said main housing for receiving and storing therein the raw-bean peels directed thereto from said guide means of said cover.

15. The apparatus for roasting raw coffee beans according to claim 11, wherein said roasting vessel (500) comprises a main body portion (520) and a bottom portion (510), said bottom portion (510) having an interior, upwardly-projecting, substantially conically-shaped bottom surface; said air opening means comprising a pluarlity of holes (512,513) in said roasting vessel formed in said bottom concially-shaped surface; said plurality of holes (512,513) comprising a first set and a second set for creating a whirling vertical motion to the heated airstream ascending therethrough, whereby the raw beans are roasted, causing their peels to separate and to ascend upwardly with the airstream to said peel-receiving vessel.

16. The apparatus for roasting raw coffee beans according to claim 13, wherein said bottom portion (510) of said roasting vessel comprises at least one cooperating projection (515) for cooperating with said at least one upwardly extending finger-member (903) for detachably supporting said roasting vessel; said upwardly extending finger-member (903) having a groove formed in its interior-facing surrface in and out of which said cooperating projection of said roasting vessel may be selectively slid, in order to detachably mount said roasting member to said mounting member.

17. The apparatus for roasting raw coffee beans according to claim 16, said roasting vessel comprising a plurality of cooperating projections for cooperating with a plurality of said upwardly extending finger-members; each of said upwardly extending finger-members (903) having a groove (903a) formed in its interior-facing surface in and out of which said cooperating projection of said roasting vessel may be selectively slid.

18. A method of roasting coffee bans, comprising:
(a) placing raw coffee beans into a vessel (500);
(b) cooking the raw coffee beans in the vessel by heating an airstream;
(c) said step (b) comprising directing the heated airstream through the bottom of the vessel (500) and upwardly through the interior of the vessel to heat the coffee beans;
(d) said step (c) comprising creating an airstream in the interior of the vessel having a turbulent, whirling motion in order to cause the peels of the coffee beans to be separated out;
(e) directing the airstream from the vessel (500) upwardly and exteriorly therefrom; and
(f) said step (e) causing the separated peels to be carried away and out of the interior of the vessel.

19. The method according to claim 18, wherein said step (e) comprises directing the airstream with peels outwardly through a cover (600) of the vessel and from there to a peel-receiving receptacle (700) for storing the peels until they are discarded.

20. The method according to claim 18, wherein said step (b) is performed for a preset period of time; and further comprising directing a cooling airstream through the bottom of the vessel and upwardly through the interior of the vessel for cooling the cooked beans, after said step (b) has been performed.
